# EUROPÄISCHE PATENTANMELDUNG

(11) **EP 1 300 253 A2**
(43) Veröffentlichungstag der Anmeldung: **09.04.2003**
(21) Anmeldenummer: 02019957.6
(22) Anmeldetag: 05.09.2002
(51) Int. Cl.: B41K 3/34, B41K 3/40, B41K 3/10, B41K 3/08, B44B 5/00

(54) **Verfahren und Einrichtung zum Prägen von Informationsträgern**

(30) Priorität: 06.10.2001 DE 10149416
(71) Anmelder: Atlantic ZeiserGmbH, 78576 Emmingen (DE)
(72) Erfinder: Berndtsson, Anders, 42934 Kullavik (SE); Pitz, Franz, 78576 Emmingen-Liptingen (DE)
(74) Vertreter: Kratzsch, Volkhard, Dipl.-Ing.

(57) **Zusammenfassung**

Die Erfindung betrifft ein Verfahren zum Prägen von Informationsträgern (11 bis 15), insbesondere kartenförmigen, wie Kreditkarten, Ausweiskarten, Kundenkarten, Bankkarten, bei dem mittels zweier Typenträger (23,24), von denen der eine Typenträger (23) erhabene Typen (40) und der andere Typenträger (24) entsprechende, vertiefte Typen (43) in Form von Zahlen, Buchstaben aufweist, den jeweils gewünschten Typen entsprechende Zeichen in Form von Zahlen, oder Buchstaben in das Material des zwischen den beiden Typenträgern (23,24) gehaltenen Informationsträgers (11 bis 15) geprägt, insbesondere aus dessen Material herausgeprägt, werden. Dabei werden mehrere Zeichen zumindest einer Zeile gleichzeitig in einem einzigen Prägevorgang geprägt. Alle Zeichen einer Zeile können dabei in einem einzigen Prägevorgang oder nacheinander in aufeinanderfolgenden Prägevorgängen geprägt werden.

## Beschreibung

Die Erfindung bezieht sich auf ein Verfahren zum Prägen von Informationsträgern, insbesondere kartenförmigen, wie Kreditkarten, Ausweiskarten, Kundenkarten, Bankkarten od.dgl., mit den Merkmalen im Oberbegriff des Anspruchs 1.

Ferner bezieht sich die Erfindung auf eine Einrichtung zur Durchführung dieses Verfahrens.

Derartige Informationsträger, wie insbesondere Karten, die aus einem prägbaren Material, z.B. aus Kunststoff, bestehen, werden bei der Herstellung in verschiedener Weise bearbeitet, wobei u.a. auch in verschiedenen Zeilen entsprechende vorgegebene Zeichen in Form von Zahlen, Buchstaben od.dgl. durch Prägen, insbesondere Herausprägen aus dem Material des Informationsträgers, erzeugt werden. So wird z.B. in einer Zeile mit relativ großen Typen eine Zahlenreihe hergestellt, die eine Identifizierungsnummer des Karteninhabers darstellen soll. Diese Nummernfolge hat z.B. bei Kreditkarten insgesamt 16 Stellen, das heißt sie besteht aus 16 Zeichen in Form von Zahlen.

In einer davon beabstandeten und dazu parallelen weiteren Zeile folgen bei Kreditkarten meist Datumsangaben, die den Gültigkeitszeitraum definieren. In einer anderen beabstandeten und dazu parallelen Zeile folgen bei Kreditkarten Zeichen in Form von Buchstaben, die den Namen des Karteninhabers wiedergeben. Diese einzelnen Zeichen in Form von Zahlen und/oder Buchstaben od.dgl. werden in das Material des Informationsträgers in bekannter Weise jeweils einzeln, Zeichen für Zeichen, geprägt. Verwendet werden dazu ein oberer radförmiger Typenträger, der um eine vertikale Achse in Bezug auf eine Station, in der der Informationsträger gehalten ist, drehbar ist, wobei jeweils der gewählte Typ dieses Typenträgers durch Drehung dieses in Position gebracht wird. Unterhalb dieses Typenträgers befindet sich ein entsprechender zugeordneter Typenträger. Die jeweiligen Typen befinden sich auf den einander zugewandten Breitseiten der beiden Typenträger und sind dort am Rand in Umfangsrichtung aufeinanderfolgend gruppiert. Zum Prägen jedes einzelnen Zeichens wird der Informationsträger mittels einer zweiachsigen Positioniervorrichtung in die Prägeposition gebracht und anschließend mittels eines Schlages auf den einen jeweiligen Typ tragenden Bestandteil des oberen Typenträgers das Zeichen in den Informationsträger geprägt. Ein solches Verfahren, bei dem Zeichen für Zeichen nacheinander geprägt werden, ist aufwendig und derart langsam, dass z.B. nur 240 Karten pro Stunde geprägt werden können.

Der Erfindung liegt die Aufgabe zugrunde, das Verfahren der eingangs genannten Art dahingehend zu verbessern, dass ein schnelleres Prägen der Informationsträger möglich ist und damit eine größere Geschwindigkeit und demzufolge ein größerer Durchsatz erreichbar sind.

Die Aufgabe ist bei einem Verfahren der eingangs genannten Art gemäß der Erfindung durch die Merkmale im Anspruch 1 gelöst. Dadurch, dass mehrere Zeichen zumindest einer Zeile gleichzeitig in einem einzigen Prägevorgang geprägt werden, wird eine erheblich gesteigerte Arbeitsgeschwindigkeit mit erheblich größerem Durchsatz erreicht. Erfahrungen haben gezeigt, dass beim Verfahren gemäß der Erfindung das Prägen z.B. bis zu 20 mal und mehr schneller vonstatten geht und ein Durchsatz an Karten in der Größenordnung z.B. zwischen 6000 bis 8000 Stück pro Stunde erreichbar ist.

Das gleichzeitige Prägen mehrerer Zeichen einer Zeile in einem einzigen Prägevorgang wird dadurch ermöglicht, dass die einzelnen, jeweils erhabene Typen bzw. zugeordnete vertiefte Typen tragenden Typenträger um in Bezug auf die Ebene des Informationsträgers dazu parallele Achsen drehverstellbar und einstellbar sind derart, dass zeilenartig mehrere erhabene Typen bzw. mehrere zugeordnete vertiefte Typen in der zum Prägen bereiten Stellung nebeneinander längs einer Reihe platziert sind, so dass bei kraftbetätigtem Gegeneinanderdrücken bei dem dazwischengehaltenen Informationsträger mehrere Zeichen einer Zeile gleichzeitig geprägt werden können.

Weitere vorteilhafte Verfahrensmerkmale und Ausgestaltungen dieses Verfahrens gemäß der Erfindung ergeben sich aus den Ansprüchen 2 bis 10.

Die Erfindung bezieht sich ferner auf eine Einrichtung zur Durchführung dieses Verfahrens, die durch die Merkmale im Anspruch 11 definiert ist. Weitere vorteilhafte Erfindungsmerkmale und Ausgestaltungen dieser Einrichtung ergeben sich aus den darauffolgenden weiteren Ansprüchen.

Das Verfahren und die Einrichtung gemäß der Erfindung sind außerordentlich einfach. Es lassen sich dadurch mit großer Geschwindigkeit eine große Anzahl von Informationsträgern, insbesondere Karten, pro Zeiteinheit prägen. Die Einrichtung kann dabei sowohl als stand-alone-Ausführung als auch als in-line-Ausführung konzipiert sein und hierbei in sonstige Bearbeitungsprozesse von Informationsträgern, insbesondere Karten, insbesondere Personalisierungsprozesse, integriert sein.

Auch wenn das Verfahren und die Einrichtung gemäß der Erfindung mit Vorteil besonders zum Prägen von Karten aus prägbarem Material, z.B. Kunststoff, geeignet sind, sind gleichwohl danach mit Vorteil auch andere Informationsträger, insbesondere Dokumente, und hierbei auch aus anderem prägbaren Material, in dieser Weise bearbeitbar.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Hinweis auf die Ansprüche darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus den Zeichnungen entnehmbaren Merkmale weitere Bestandteile der Erfindung, auch wenn sie nicht besonders hervorgeben und insbesondere nicht in den Ansprüchen erwähnt sind.

Die Erfindung ist nachfolgend anhand von in den Zeichnungen gezeigten Ausführungsbeispielen näher erläutert. Es zeigen:
- Fig. 1: eine schematische Draufsicht eines Teils von Einrichtungen zum Prägen von Informationsträgern gemäß einem ersten Ausführungsbeispiel, die an einer Rundtaktmaschine vorgesehen sind,
- Fig. 2: einen schematischen Schnitt entlang der Linie II-II in Fig. 1 mit teilweiser Seitenansicht der Einrichtung gemäß dem ersten Ausführungsbeispiel,
- Fig. 3: eine schematische Draufsicht eines Teils von Einrichtungen zum Prägen von Informationsträgern gemäß einem zweiten Ausführungsbeispiel, die an einer Lineartaktmaschine vorgesehen sind,
- Fig. 4: eine teilweise geschnittene Seitenansicht einer Prägestation in Fig. 3, in größerem Maßstab,
- Fig. 5: eine schematische Seitenansicht der Prägestation in Pfeilrichtung V in Fig. 4.

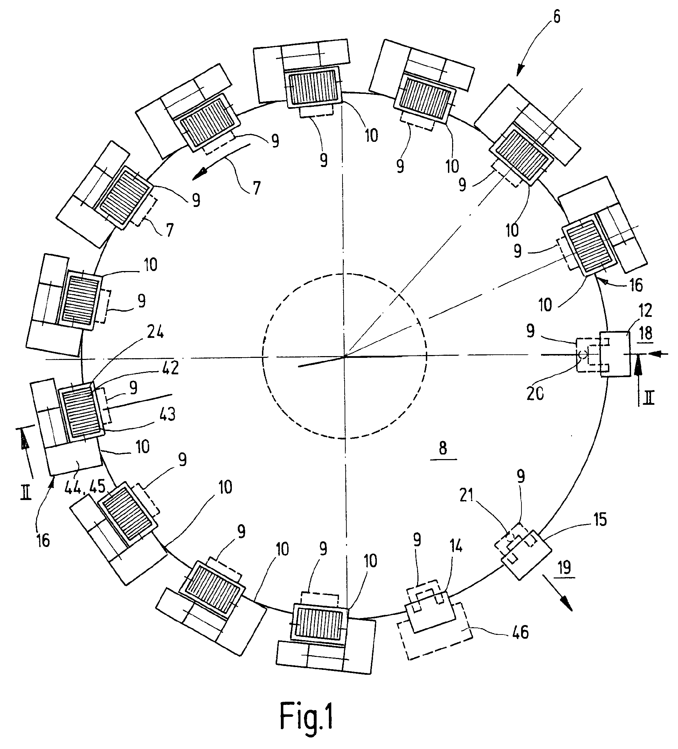

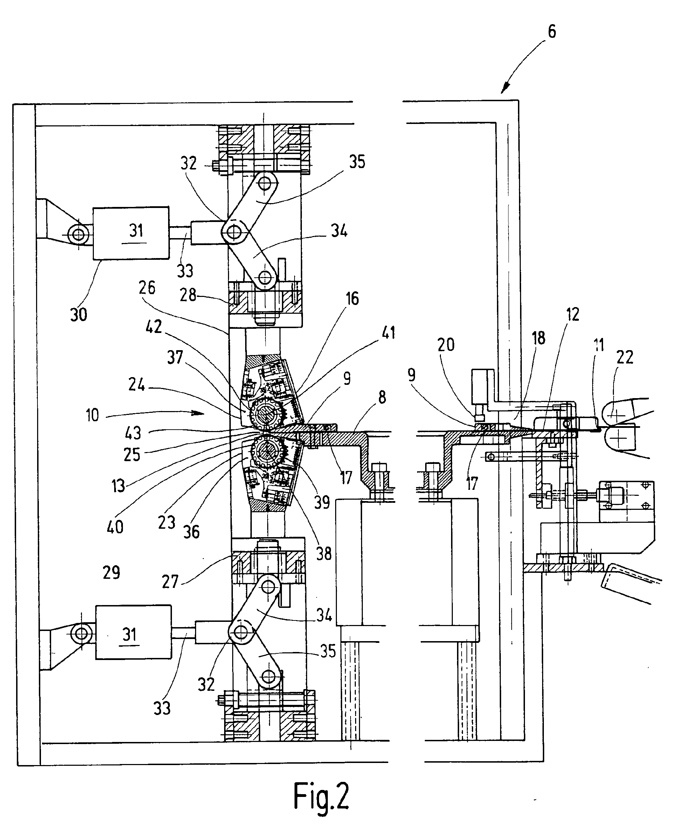

In Fig. 1 und 2 sind schematisch wegen der besseren Übersicht nur diejenigen Teile einer Einrichtung 10 gezeigt, die zur Erläuterung des erfindungsgemäßen Verfahrens zum Prägen von Informationsträgem 11 und der Einrichtung 10 gemäß der Erfindung erforderlich sind. In Fig.1 und 2 ist schematisch eine Rundtaktmaschine 6 gezeigt, die einen mittels einer üblichen Antriebseinrichtung taktweise in Umfangsrichtung gemäß Pfeil 7 um eine vertikale Achse drehbar angetriebenen Rundtisch 8 aufweist, der in vorzugsweise gleich großen Umfangswinkelabständen angeordnete, jeweils gleichartige Halteeinrichtungen 9 für jeweils einen nur schematisch angedeuteten kartenförmigen Informationsträger 12, 13, 14, 15 trägt. Beim Rundtisch 8 sind auch in den übrigen Halteeinrichtungen 9 entsprechende kartenförmige Informationsträger gehalten, die in Fig. 1 nur nicht sichtbar sind. Bei diesen insbesondere kartenförmigen Informationsträgern kann es sich z. B. um Kreditkarten, Ausweiskarten, Kundenkarten, Bankkarten od. dgl. Karten handeln, die meist aus Kunststoffmaterial bestehen. Als Informationsträger 11 bis 15 können statt Karten aber auch andere Dokumente vorgesehen sein.

Die Rundtaktmaschine 6 weist beim gezeigten Ausführungsbeispiel in Fig. 1 und 2 insgesamt 11 Einrichtungen 10 zum Prägen der Informationsträger 11 bis 15 auf, wobei diese einzelnen Einrichtungen 10 rundum den Rundtisch 8 stationär angeordnet sind und dabei in gleichen Umfangswinkelabständen voneinander platziert sind. Jede Einrichtung 10 ist als Prägestation 16 ausgebildet, von denen nur eine Prägestation 16 in Fig. 2 gezeigt ist, wobei alle Prägestationen genauso ausgebildet sind und es daher ausreichend ist, Einzelheiten anhand der Prägestation 16 zu erläutern.

Jede Halteeinrichtung 9 ist als Klemmvorrichtung ähnlich einer Klammer ausgebildet, die mittels einer Druckfeder 17 selbsttätig in Klemmstellung gehalten wird, in der mittels der Klemmvorrichtung ein Informationsträger, wie z. B. die Informationsträger 12 bis 15, fest und lagesicher gehalten sind. Im Bereich der Zuführstelle 18 und der Abgabestelle 19, die in Fig. 1 lediglich mit einem Pfeil verdeutlicht sind, ist jeweils eine nur schematisch als druckmittelbetriebener Arbeitszylinder angedeutete stationäre Betätigungseinrichtung 20 bzw. 21 vorgesehen, die dann, wenn beim Umlauf des Rundtisches 8 eine Halteeinrichtung 9 in den Bereich der Betätigungseinrichtung 20 bzw. 21 gelangt, durch Hubbetätigung nach unten die Halteeinrichtung 9 öffnet, so dass bei der Zuführstelle 18 ein Informationsträger 12 von der Halteeinrichtung 9 aufgenommen werden kann und bei der Abgabestelle 19 ein von der Halteeinrichtung 9 gehaltener Informationsträger 15 freigegeben wird und dadurch abgeführt werden kann.

Der Rundtaktmaschine 6 ist an der Zuführstelle 18 eine in Fig. 2 nur schematisch angedeutete Zuführvorrichtung 22 für einen Informationsträger 11 zugeordnet, die Teil eines üblichen, nicht weiter gezeigten Anlegers ist. An der Abgabestelle 19 ist eine nicht weiter gezeigte übliche Abführvorrichtung für den Informationsträger 15 und nächstfolgende angeordnet. Jede Einrichtung 10, die als Prägestation 16 ausgebildet ist, weist ein erstes unteres Prägewerk 23 und ein diesem zugeordnetes, gegenüberliegendes und darüber angeordnetes zweites Prägewerk 24 auf, die unter Bildung eines Spalts 25 dazwischen in einem nur schematisch angedeuteten Gestell 26 so gehalten sind, dass beide Prägewerke 23 und 24 in ihrer Ausgangsstellung mit Abstand voneinander unter Bildung eines Spalts 25 dazwischen und derart gehalten sind, dass bei der Drehbetätigung des Rundtischs 8 in Pfeilrichtung 7 ein mittels der Halteeinrichtung 9 gehaltener Informationsträger 13 in diesen Spalt einfahren kann. Hiernach werden beide Prägewerke 23 und 24 durch Relativbewegung in Vertikalrichtung (Fig. 2) aufeinanderzu kraftbetätigt, wodurch die Prägewerke 23, 24 bei dem dazwischen gehaltenen Informationsträger 13 mehrere Zeichen oder alle Zeichen einer Zeile in einem einzigen Prägevorgang gleichzeitig prägen. Nach diesem Prägevorgang werden die beiden Prägewerke 23 und 24 gegensinnig in vertikaler Richtung gemäß Fig. 2 voneinanderweg wieder in ihre Ausgangsstellung bewegt unter Freigabe des zuvor geprägten Informationsträgers 13, der beim anschließenden weiteren Takt des Rundtischs 8 zu der in Pfeilrichtung 7 nächstfolgenden Einrichtung 10 in Gestalt einer gleichen Prägestation 16 weitertransportiert wird.

Zu dieser Bewegung der Prägewerke 23 und 24 aufeinanderzu und voneinanderweg sind beide Prägewerke 23, 24 im Gestell 26 vertikal verschiebbar gelagert. An einem Teil 27 des Prägewerks 23 bzw. an einem Teil 28 des zweiten Prägewerks 24, der jeweils Halteteil des zugeordneten Prägewerks ist und mit diesem verschiebbar ist, greift eine zugeordnete Antriebseinrichtung 29 bzw. 30 an, mittels der das jeweilige Prägewerk 23 bzw. 24 zwischen der Prägestellung und der Ausgangsstellung bewegbar ist. Die Antriebseinrichtungen 29, 30 sind gleichartig ausgebildet und weisen jeweils einen druckmittelbetriebenen Arbeitszylinder 31 und eine nach Kniehebelprinzip gestaltete Hebelanordnung 32 auf, auf die der Arbeitszylinder 31 arbeitet. In Fig. 2 ist der Arbeitszylinder 31 in der der Ausgangsstellung der Prägewerke 23, 24 entsprechenden Position gezeigt. Zum Überführen der Prägewerke 23, 24 in deren Prägestellung fährt die Kolbenstange 33 des Arbeitszylinders 31 aus und drückt die beiden Hebel 34, 35 der Hebelanordnung 32 zunächst in eine im wesentlichen vertikale Position , in der die Hebel 34, 35 im wesentlichen längs einer Vertikallinie miteinander fluchten. Diese Position entspricht der Prägestellung der Prägewerke 23 und 24. Beim weiteren Ausfahren der Kolbenstange 33 werden die Hebel 34, 35 wieder in einewinkelstellung zueinander bewegt und dabei etwa in eine Position, die spiegelbildlich zu der in Fig. 2 gezeigten Stellung ist. In dieser Position verbleibt der jeweilige Arbeitszylinder 31 mit den Hebeln 34 und 35 bis zum nächsten Arbeitstakt und Prägevorgang, bei dem die Kolbenstange 33 gegensinnig in die in Fig. 2 gezeigte Position zurückbewegt wird. Einem Arbeitshub des Arbeitszylinders 31 entspricht somit eine Bewegung der Prägewerke 23 und 24 ausgehend von der Ausgangsstellung in ihre Prägestellung und wieder in ihre Ausgangsstellung. Durch diesen Bewegungsablauf ergibt sich für die Bewegung der Prägewerke 23, 24 ein relativ gleichmäßiger Übergang von Prägestellung zur Ausgangsstellung und zurück mit möglichst sanfter Beschleunigung und Verzögerung, wodurch Vibrationen und Vibrationsbelastungen der Prägewerke 23 und 24 vermieden oder zumindest reduziert sind.

Jedes Prägewerk 23 und 24 der einzelnen Prägestationen 16 ist beim ersten Ausführungsbeispiel als an sich bekanntes vollautomatisch einstellbares Nummerierwerk 36 bzw. 37 ausgebildet. Ein derartiges vollautomatisch einstellbares Nummerierwerk ist in EP 0 718 112 A1 gezeigt und beschrieben, weshalb zur Vermeidung unnötiger Wiederholungen hinsichtlich der besonderen Gestaltung auf diese Veröffentlichung verwiesen wird. Das jeweilige Nummerierwerk 36, 37 ist hier zum Prägen von Zeichen bei den Informationsträgern 11 bis 15 so modifiziert, dass die einzelnen entlang der Längsmittelachse 38 nebeneinander angeordneten Nummerierräder als Typenräder 39 des ersten Prägewerks 23 fungieren und als solche auf den Umfangszähnen mit zum Prägen geeigneten erhabenen Typen 40 versehen sind. Das das zweite Prägewerk 24 bildende Nummerierwerk 37 ist analog gestaltet, derart, dass dessen längs der Mittelachse 41 koaxial angeordnete Nummerierräder als Typenräder 42 fungieren und als solche an den Enden ihrer Zähne vertiefte Typen 43 tragen. Die Längsmittelachsen 38 und 41 verlaufen parallel zueinander und innerhalb einer gemeinsamen vertikalen Ebene.

Bei dem ersten Prägewerk 23 ist die Anordnung daher so getroffen, dass mehrere nebeneinander angeordnete Typenräder 39 gleicher Art, die jeweils mit erhabenen Typen 40 an den Enden ihrer Zähne versehen sind, in koaxialer Anordnung etwa trommelartig zu diesem ersten Prägewerk 23 zusammengefasst sind, wobei dieses Prägewerk 23 nach der Technik dieses Nummerierwerks 36 vollautomatisch einstellbar ist und dabei eine eigene Antriebseinrichtung 44 aufweist, die einen Antriebsmotor und ein nachgeschaltetes Getriebe aufweist und nur in Fig. 1 schematisch angedeutet ist. In analoger Weise ist das obere Prägewerk 24, das in Fig. 1 bei den einzelnen insgesamt 11 Prägestationen 16 sichtbar ist, aus dem Nummerierwerk 37 und derart gebildet, dass mehrere gleichartige koaxiale Typenräder 42 längs der Längsmittelachse 41 nebeneinander angeordnet und trommelartig zusammengefasst sind, wobei diese Typenräder 42 an den Enden ihrer Zähne jeweils vertiefte Typen 43 tragen und auch dieses Nummerierwerk 37 in Form des zweiten Prägewerks 24 vollautomatisch einstellbar ist und eine eigene Antriebseinrichtung 45 mit nicht gezeigtem Antriebsmotor und nachgeschaltetem Getriebe aufweist. In der Draufsicht in Fig. 1 ist schematisch je Prägestation 16 nur das oben angeordnete zweite Prägewerk 24 sichtbar, dessen einzelne trommelartig angeordnete Typenräder 42 an den Enden ihrer Zähne vertiefte Typen 43 tragen. Bei dieser Anordnung werden beim Prägevorgang die Zeichen beim Informationsträger 13 von unten nach oben aus dem Material des Informationsträgers 13 herausgeprägt. Statt dessen kann die Anordnung der Prägewerke 23, 24 auch vertauscht sein, so dass die Zeichen von oben nach unten herausgeprägt werden.

Jedes Prägewerk 23, 24 jeder Prägestation 16 weist mehr als zwölf Typenräder 39 bzw. 42 auf, z. B. 24 Typenräder oder auch mehr bis hin beispielsweise zu 27 Typenrädern, was insbesondere für das nachfolgend erläuterte zweite Ausführungsbeispiel gilt. Jedes der Typenräder 39 und 42 weist auf seinem Umfang verteilt z. B. 16 unterschiedliche Typen auf. Aufgrund der Ausbildung jedes Prägewerks 23, 24 als vollautomatisch einstellbares Nummerierwerk 36 bzw. 37 bekannter Art ist somit je Prägewerk 23, 24 jedes Typenrad 39 bzw. 42 dieses Prägewerks 23, 24 vollautomatisch einstellbar, wobei die Einstellung der Prägewerke 23, 24 der jeweiligen Prägestation 16 während des taktweisen Transports der Informationsträger 11 bis 15 und weiterer auf dem Rundtisch 8 in Pfeilrichtung 27 geschieht.

Beim ersten Ausführungsbeispiel in Fig. 1 und 2 sind insgesamt 11 gleichartige Prägestationen 16 entlang der Kreisbogenbahn, die der Rundtisch 8 mit seinen einzelnen Halteeinrichtungen 9 und darin gehaltenen Informationsträgern 11 bis 15 und weiteren durchläuft, hintereinander angeordnet. Es versteht sich, dass alternativ dazu diese einzelnen Prägestationen 16 auch linear hintereinander angeordnet sein können, wobei die Maschine dann als Lineartaktmaschine ausgebildet ist, bei der die jeweiligen Informationsträger 11 bis 15 und weitere entlang den linear platzierten Prägestationen 16 nacheinander zum Prägen bewegt werden. Es versteht sich, dass alle Prägestationen 16 während des taktweisen Transports der Informationsträger 11 bis 15 und weitere zeitgleich auf die beim jeweiligen Informationsträger 11 bis 15 und weiteren zu prägenden Zeichen eingestellt werden. Bei der Einstellung zweier eine Prägestation 16 bildender Prägewerke 23 und 24 werden die jeweils gegenüberstehenden Typenräder 39 und 42 auf den gleichen Typ eingestellt, so dass beim ersten Prägewerk 23 einem erhabenen Typ 40 beim anderen Prägewerk 24 ein vertiefter Typ 43 gleicher Art einander gegenüberstehen, so dass beim Auslösen des Prägevorganges das Material, z. B. Kunststoffmaterial, des Informationsträgers 11 bis 15 und weitere entsprechend verformt wird und dadurch die entsprechenden Zeichen geprägt werden.

In Fig. 1 ist gestrichelt angedeutet, dass im Anschluss an die elfte Prägestation 16 z. B. eine stationäre Oberflächenbehandlungsstation 46 vorgesehen sein kann, in der die Oberfläche der Prägung des dorthin gelangenden Informationsträgers 14 behandelt wird, z. B. gefärbt wird oder mit einer Folie überdeckt wird od. dgl..

Es versteht sich, dass bei einem anderen, nicht gezeigten Ausführungsbeispiel zusätzlich zu mindestens einer Prägestation 16 z. B. eine Chip-Codierungs-Station und/oder eine Magnetcodierungs-Station und/oder eine Druck-Station mit ink-jet-oder Laserdruck und/oder eine Kamera-Prüfstation od. dgl. vorgesehen sein können, die dann längs des Transportweges der einzelnen Informationsträger 11 bis 15 und weitere an geeigneter Stelle platziert sind. Dies gilt sowohl für die Rundtaktmaschine 6 als auch für die Anordnung der einzelnen Prägestationen 16 linear z. B. bei einer Lineartaktmaschine.

Die Rundtaktmaschine 6 mit den einzelnen Einrichtungen 10 in Gestalt von Prägestationen 16 ermöglicht folgendes Verfahren. Jede Einrichtung 10 in Form einer Prägestation 16 dient zum Prägen der insbesondere kartenförmigen Informationsträger 1 bis 15 und weitere, wie z. B. von Kredtikarten, Ausweiskarten, Kundenkarten, Bankkarten od. dgl., die insbesondere aus prägbarem Kunststoffmaterial oder sonstigem prägbaren Material bestehen.

Hierbei werden mittels zweier Blöcke jeweiliger Typenräder 39 einerseits und 42 andererseits, von denen die erstgenannten Typenräder 39 erhabene Typen 40 tragen und die anderen Typenräder 42 entsprechende vertiefte Typen 43 tragen, die jeweils Zahlen, Buchstaben od. dgl. sind, den jeweils durch Einstellung gewählten Typen 40, 43 entsprechende Zeichen in Form von Zahlen, Buchstaben od. dgl. in das Material des jeweiligen Informationsträgers 11 bis 15 geprägt, insbesondere aus dessen Material herausgeprägt, wobei während des Prägevorganges der jeweilige Informationsträger 11 bis 15 zwischen diesen Gruppen von Typenrädern 39 und 42 gehalten wird. Die Typenräder 39 sind zum ersten Prägewerk 23 und die anderen Typenräder 42 zum zweiten Prägewerk 24 trommelartig zusammengefasst, so dass in einem einzigen Prägevorgang beim Informationsträger 11 bis 15 mehrere Zeichen einer Zeile, die parallel zu den Längsmittelachsen 38, 41 verläuft, gleichzeitig geprägt werden. Dabei ist es je nach Gegebenheiten möglich, sämtliche Zeichen einer Zeile in einem einzigen Prägevorgang zu prägen. Wenn dies nicht klappt oder nicht gewünscht wird, können alle Zeichen einer Zeile nacheinander in aufeinanderfolgenden Prägevorgängen geprägt werden. So kann z. B. bei der Rundtaktmaschine 6 in Fig. 1 und 2 in der auf die Zuführstelle 18 folgenden ersten Prägestation 16 in einem ersten Prägevorgang ein Teil der Zeichen einer Zeile, z. B. nur jedes zweite Zeichen dieser Zeile, geprägt werden und hiernach der Informationsträger 12 in Pfeilrichtung 7 zur nächstfolgenden Prägestation 16 transportiert werden, in der dann ein weiterer Teil, z. B. der übrige Teil, der Zeichen derselben Zeile geprägt wird. Dann bedarf es für das Prägen einer kompletten Zeile beim Informationsträger 12 somit des Durchlaufs durch zwei aufeinanderfolgende Prägestationen 16. Wenn dies nicht ausreicht, um beim Informationsträger 12 alle Zeichen einer Zeile zu prägen, geschieht dies in der nächstfolgenden Prägestation 16 und erforderlichenfalls in der darauffolgenden Prägestation 16 usw.

Weist eine Rundtaktmaschine 6 nur zwei aufeinanderfolgende Prägestationen 16 auf, die zum Prägen der Zeichen einer einzigen Zeile ausreichend sind, so können z. B. in der ersten Prägestation 16 nur ein Teil der Zeichen einer Zeile und im nächsten Schritt in der nächsten Prägestation 16 der übrige Teil der Zeichen dieser Zeile geprägt werden. Reichen zwei Prägestationen hierzu nicht aus, so kann jede Prägestation auch für einen zweifachen oder weiteren Prägevorgang desselben Informationsträgers 12 benutzt werden. Z. B. kann in einem Prägevorgang ein Teil der Zeichen einer Zeile, z. B. nur jedes zweite Zeichen, geprägt werden. Hiernach erfolgt ein Relativversatz zwischen den Typenträgern in Form der Typenräder 39, 42 der Prägestation 16 einerseits und dem Informationsträger 12 andererseits in Richtung dieser Zeile auf Lücke zwischen den bereits geprägten Zeichen, so dass hiernach ein weiterer Teil, z. B. der übrige Teil der Zeichen derselben Zeile, in der gleichen Prägestation 16 geprägt werden kann. Der zu prägende Informationsträger 12 wird hierbei somit relativ zur stationären Prägestation 16 parallel zu den Längsmittelachse 38, 41 versetzt. Dies hat den Vorteil, dass man mit einer geringeren Anzahl von Prägestationen auskommt, wobei sich allerdings der Nachteil ergibt, dass der Informationsträger 12 relativ zur Prägestation 16 hin und her versetzt werden muss.

Mit einer einzigen Prägestation 16 beschriebener Art können nach dem Prägen der Zeichen einer Zeile beim Informationsträger 12 auch mehrere in einer zweiten und einer weiteren Zeile folgende Zeichen geprägt werden. Zum Prägen der Zeichen der zweiten und weiteren Zeile erfolgt dann jeweils ein Relatiwersatz zwischen den Prägewerken 23, 24 einerseits und dem Informationsträger 12 andererseits in Richtung quer, insbesondere rechtwinklig, zum Zeilenverlauf, d. h. zur Längsmittelachse 38, 41, um einen jeweiligen Zeilenabstand, so dass dann in der gleichen Prägestation 16 die Zeichen der zweiten und weiteren Zeile geprägt werden können.

Bei der Rundtaktmaschine 6 gemäß Fig. 1 und 2 stehen genügend Prägestationen 16 zur Verfügung, um bei einem zugeführten Informationsträger 12 nacheinander in den aufeinanderfolgenden Prägestationen 16 verschiedene Zeichen zu prägen, und zwar solche Zeichen einer Zeile und hiernach Zeichen einer nächstfolgenden und weiteren Zeile, so dass nach Durchlauf des Informationsträgers 12 durch sämtliche 11 Prägestationen 16 sämtliche verlangten Zeichen auf dem Informationsträger 12 in aufeinanderfolgenden Prägevorgängen geprägt werden. Hierbei sind so viele Informationsträger 12 im Umlauf, wie Prägestationen 16 vorhanden sind. Eine solche Anordnung entsprechend Fig. 1 und 2 hat den Vorteil maximaler Geschwindigkeit mit einem großen Durchsatz geprägter Informationsträger 12 pro Zeiteinheit. Die Erfindung macht es möglich, pro Stunde z. B. eine Anzahl von 6 000 - 10 000 Informationsträgern mit den gewünschten Zeichen zu prägen.

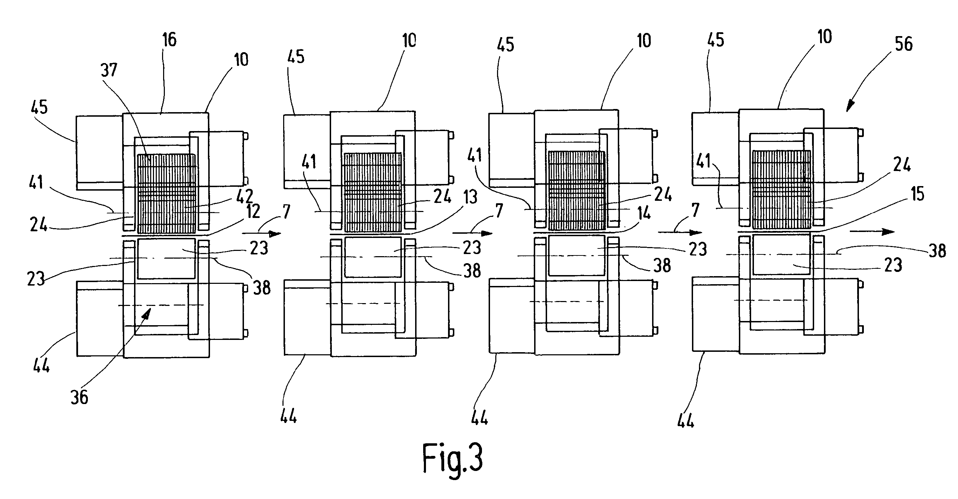

Bei dem in Fig.3 bis 5 gezeigten zweiten Ausführungsbeispiel einzelner Einrichtungen 10 in Form von Prägestationen 16 sind für die Teile, die dem ersten Ausführungsbeispiel entsprechen, gleiche Bezugszeichen verwendet, so dass dadurch zur Vermeidung von Wiederholungen auf die Beschreibung des ersten Ausführungsbeispieles Bezug genommen ist.

Beim zweiten Ausführungsbeispiel sind die einzelnen Prägestationen 16 nicht längs einem Bogen sondern linear in bestimmten gleichmäßigen Abständen voneinander angeordnet, wobei diese z. B. Teil einer Lineartaktmaschine 56 sein können, die ansonsten nicht weiter dargestellt ist. Die einzelnen Informationsträger 12 bis 15 werden hierbei in Pfeilrichtung 7 taktweise linear vorwärtsbewegt von der einen Prägestation 16 zur nächstfolgenden Prägestation 16, wobei auch hier die einzelnen Informationsträger 12 bis 15 mittels nicht weiter gezeigter Halteeinrichtungen fest gehalten sind, so dass sie nicht verrutschen können, während die Informationsträger 12 bis 15 durch den Spalt 25 zwischen den jeweiligen Prägewerken 23 und 24 jeder Prägestation 16 hindurchgeführt bzw. während des Prägevorganges in diesem Spalt 25 gehalten werden. Auch wenn in Fig. 3 nur vier aufeinanderfolgende Prägestationen 16 dargestellt sind, können gleichwohl, wie beim ersten Ausführungsbeispiel, auch mehr Prägestationen oder auch weniger vorgesehen sein. Die Wirkungsweise beim Prägen der Informationsträger 12 bis 15 ist bei jedem Prägewerk 23 und 24 je Prägestation 16 genauso wie beim zuvor beschriebenen ersten Ausführungsbeispiel.

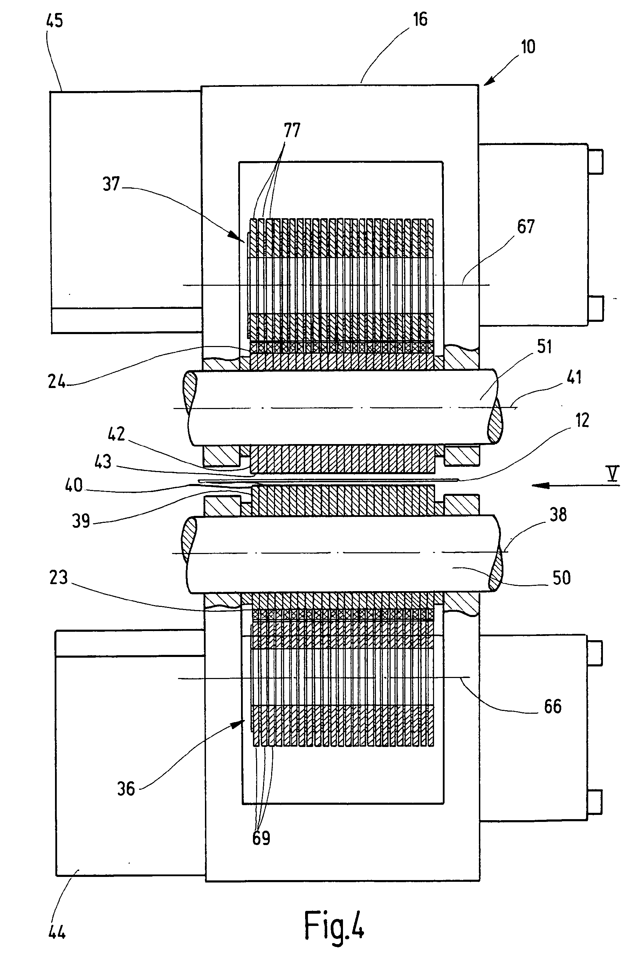

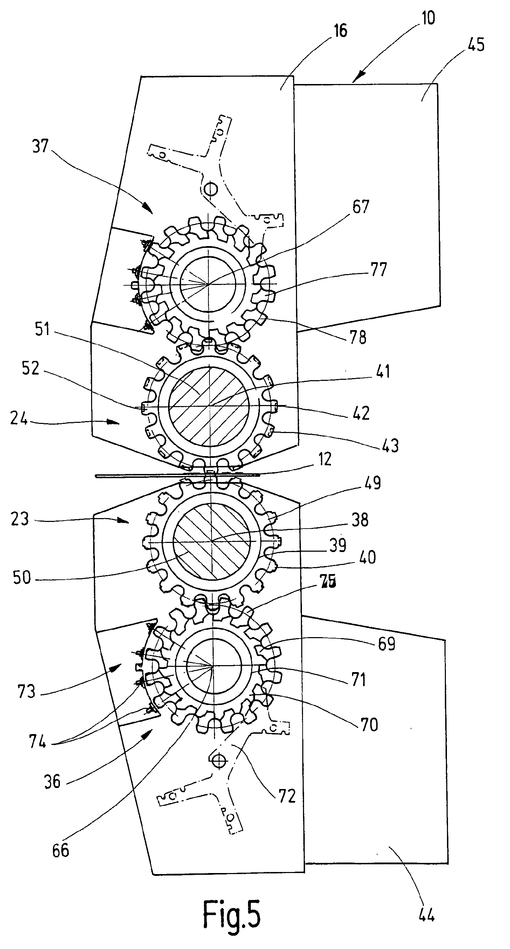

Das zweite Ausführungsbeispiel unterscheidet sich vom ersten Ausführungsbeispiel jedoch dadurch, dass jedem Prägewerk 23 und 24 einer Prägestation 16 ein an sich bekanntes vollautomatisch einstellbares Nummerierwerk 36 bzw. 37 getrieblich zugeordnet ist, das mit seiner Trommelachse 66 bzw. 67 parallel zur jeweiligen Längsmittelachse 38 bzw. 41 verläuft. Auch hierbei entspricht das jeweilige Nummerierwerk 36, 37 demjenigen, wie es in der EP 0 718 112 A1 beschrieben ist, auf die bezüglich der Einzelheiten zur Vermeidung von Wiederholungen Bezug genommen wird. In Fig. 4 und 5 sind schematisch die auf der Trommelachse 66 des Nummerierwerks 36 sitzenden Nummerierräder 69 angedeutet sowie die jeweils zwischen zwei Nummerierrädern 69 befindlichen, mit Zähnen 70 versehenen Sperrscheiben 71. Jeder Sperrscheibe 71 ist eine Klinke 72 zugeordnet, von der in Fig. 5 eine Klinke 72 gestrichelt angedeutet ist. Jedem Nummerierrad 69 ist eine dessen Stellung feststellende Fühleinrichtung 73 zugeordnet, die in Fig. 5 schematisch angedeutet ist. Die Fühleinrichtung 73 weist vier längs der Umlaufbahn des Nummerierrades 69 in Abständen voneinander angeordnete Hall-Sensoren 74 und einzelne Permanentmagnete verschiedener Polung, die an jedem Nummerierrad 69 vorgesehen und nicht gezeigt sind, auf.

In gleicher Weise ist auch das in Fig. 4 und 5 oben angeordnete andere Nummerierwerk 37 ausgebildet, von dem ebenfalls die einzelnen längs der Trommelachse 67 angeordneten koaxialen Nummerierräder 77 gezeigt sind. Die beiden Nummerierwerke 36, 37 sind dahingehend modifiziert, dass die Nummerierräder 69 bzw. 77 jeweils Zahnrädern entsprechend mit Antriebszähnen 75 bzw. 78 versehen sind. Die Typenräder 39 des Prägewerks 23 sowie die Typenräder 42 des zweiten Prägewerks 24 sind in Anpassung daran als Zahnräder 49 bzw. 52 ausgebildet, die zu ihrem der Einstellung dienenden Antrieb mit den Antriebszähnen 75 bzw. 78 der Nummerierräder 69 bzw. 77 des jeweils zugeordneten Nummerierwerks 36 bzw. 37 in Eingriff stehen, wobei die Zahnräder 49, die die Typenräder 39 des ersten Prägewerks 23 bilden, am Ende der Zähne die erhabenen Typen 40 tragen, während die Zahnräder 52, die die Typenräder 42 des zweiten Prägewerks 24 bilden, am Ende ihrer Zähne die vertieften Typen 43 tragen. Entsprechend Fig. 4 und 5 sind die Typenräder 39 des ersten Prägewerks 23 nebeneinander drehbar auf einer Achse 50 gehalten und in nicht weiter gezeigter Weise zusammengespannt. In entsprechender Weise sind die Typenräder 42 des zweiten Prägewerks 24 koaxial und nebeneinander drehbar auf einer Achse 51 gehalten und in nicht weiter gezeigter Weise zusammengespannt. Die Längsmittelachsen 38, 41 verlaufen jeweils parallel zur Trommelachse 66, 67 der Nummerierwerke 36, 37.

Die insbesondere anhand von Fig. 4 und 5 beschriebene Gestaltung der Prägestation 16 hat den Vorteil, dass je Prägewerk 23, 24 dessen Typenräder 39 bzw. 42 sehr schmal gestaltet werden können, so dass je Prägewerk 23, 24 eine größere Anzahl von Typenrädern 39 bzw. 42 vorgesehen werden kann. Jedes Prägewerk 23, 24 hat z. B. bis zu 27 nebeneinandersitzende Typenräder 39 bzw. 42, die jeweils auf dem Umfang verteilt 16 Typen 40 bzw. 43 tragen. Als weiterer Vorteil der Gestaltung gemäß dem zweiten Ausführungsbeispiel ergibt sich derjenige, dass die jeweilige Achse 50, 51 einen relativ großen Durchmesser haben und daher dementsprechend große Kräfte aufnehmen kann. Diese Gestaltung der Prägewerke 23, 24 macht es möglich, auch sehr eng nebeneinander befindliche Zeichen auf einem Informationsträger 12 in einem Prägevorgang prägen zu können, z. B. in einem Prägevorgang alle Zeichen in einer Zeile prägen zu können. Im anderen Fall, wo es für die Prägung aller Zeichen einer Zeile oder für die Prägung der Zeichen in weiteren zueinander parallelen Zeilen weiterer Prägevorgänge bedarf, sind entsprechend Fig. 3 mehrere gleichartige Prägestationen 16 in gleichmäßigen Abständen linear angeordnet, wobei die einzelnen zu prägenden Informationsträger 12 und weitere nacheinander durch diese einzelnen Prägestationen 16 hindurchgeführt werden.

## Patentansprüche

1. Verfahren zum Prägen von Informationsträgern (11 bis 15), insbesondere kartenförmigen, wie Kreditkarten, Ausweiskarten, Kundenkarten, Bankkarten od.dgl., bei dem mittels zwei Typenträgern (23,24), von denen der eine Typenträger (23) erhabene Typen (40) und der andere Typenträger (24) entsprechende, vertiefte Typen (43) in Form von Zahlen, Buchstaben od.dgl. aufweist, den jeweils gewählten Typen entsprechende Zeichen in Form von Zahlen, Buchstaben od.dgl. in das Material des zwischen den beiden Typenträgern (23,24) gehaltenen Informationsträgers (11 bis 15) geprägt, insbesondere aus dessen Material herausgeprägt, werden,
**dadurch gekennzeichnet,**
**dass** mehrere Zeichen zumindest einer Zeile gleichzeitig in einem einzigen Prägevorgang geprägt werden.

2. Verfahren nach Anspruch 1,
**dadurch gekennzeichnet,**
**dass** alle Zeichen einer Zeile nacheinander in aufeinanderfolgenden Prägevorgängen geprägt werden.

3. Verfahren nach Anspruch 1 oder 2,
**dadurch gekennzeichnet,**
**dass** in einem ersten Prägevorgang ein Teil der Zeichen einer Zeile, z.B. nur jedes zweite Zeichen, geprägt wird, dass hiernach der Informationsträger (11 bis 15) linear oder längs einem Bogen einer nachfolgenden Prägestation (16) zugeführt wird und dass in dieser nachfolgenden Prägestation (16) in einem zweiten Prägevorgang ein weiterer Teil, z.B. der übrige Teil, der Zeichen derselben Zeile geprägt wird.

4. Verfahren nach einem der Ansprüche 1 bis 3,
**dadurch gekennzeichnet,**
**dass** nach dem Prägen der Zeichen einer Zeile mehrere in einer zweiten und weiteren Zeile folgende Zeichen beim Informationsträger (11 bis 15) geprägt werden.

5. Verfahren nach Anspruch 4,
**dadurch gekennzeichnet,**
**dass** zum Prägen der Zeichen der zweiten und weiteren Zeile der Informationsträger (11 bis 15) linear oder längs einem Bogen einer weiteren nachfolgenden Prägestation (16) zugeführt wird und in dieser die Zeichen der zweiten und weiteren Zeile geprägt werden.

6. Verfahren nach Anspruch 1 oder 2,
**dadurch gekennzeichnet,**
**dass** in einem Prägevorgang ein Teil der Zeichen einer Zeile, z.B. nur jedes zweite Zeichen, geprägt wird, dass hiernach ein Relativversatz zwischen den Typenträgern (23,24) einerseits und dem Informationsträger (11 bis 15) andererseits in Richtung dieser Zeile auf Lücke zwischen den bereits geprägten Zeichen erfolgt und dass dann in der gleichen Prägestation (16) ein weiterer Teil, z.B. der übrige Teil, der Zeichen dieser Zeile geprägt wird.

7. Verfahren nach einem der Ansprüche 4 bis 6,
**dadurch gekennzeichnet,**
**dass** zum Prägen der Zeichen der zweiten und weiteren Zeile des Informationsträgers (11 bis 15) ein Relatiwersatz zwischen den Typenträgern (23,24) einerseits und dem Informationsträger (11 bis 15) andererseits in Richtung quer, insbesondere etwa rechtwinklig, zum Zeilenverlauf um einen jeweiligen Zeilenabstand erfolgt und dann in der gleichen Prägestation (16) die Zeichen der zweiten und weiteren Zeile geprägt werden.

8. Verfahren nach einem der Ansprüche 1 bis 7,
**dadurch gekennzeichnet,**
**dass** alle Zeichen einer Zeile in einem einzigen Prägevorgang geprägt werden.

9. Verfahren nach einem der Ansprüche 1 bis 8,
**dadurch gekennzeichnet,**
**dass** vor dem jeweiligen Prägevorgang, z.B. während des Weitertransports des Informationsträgers (11 bis 15), die Typenträger (23) mit den erhabenen Typen (40) und die Typenträger (24) mit den vertieften Typen (43) auf das jeweils zu prägende Zeichen eingestellt werden.

10. Verfahren nach einem der Ansprüche 1 bis 9,
**dadurch gekennzeichnet,**
**dass** zum gleichzeitigen Prägen mehrerer Zeichen einer Zeile des Informationsträgers (11 bis 15) mehrere nebeneinander angeordnete Typenträger (23) mit jeweils erhabenen Typen (40) und mehrere zugeordnete, nebeneinander angeordnete Typenträger (24) mit jeweils vertieften Typen (43) durch Relativbewegung aufeinanderzu kraftbetätigt werden unter Prägung der Zeichen des dazwischen gehaltenen Informationsträgers (11 bis 15).

11. Einrichtung zur Durchführung des Verfahrens nach Anspruch 1,
**dadurch gekennzeichnet,**
**dass** mehrere nebeneinander angeordnete Typenträger, insbesondere Typenräder (39), mit jeweils erhabenen Typen (40) zu einem ersten Prägewerk (23) und mehrere nebeneinander angeordnete Typenträger, insbesondere Typenräder (42), jeweils mit vertieften Typen (43) zu einem zweiten, gegenüberliegenden Prägewerk (24) zusammengefasst sind, dass beide Prägewerke (23,24) unter Bildung eines Spalts (25) dazwischen gehalten sind, in dem der zum Prägen eingeführte Informationsträger (11 bis 15) gehalten wird, und dass die Prägewerke (23,24) zum Prägen der Zeichen beim Informationsträger (11 bis 15) gegeneinander kraftbetätigt und hiernach wieder voneinanderweg bewegt werden.

12. Einrichtung nach Anspruch 11,
**dadurch gekennzeichnet,**
**dass** das erste Prägewerk (23) und das zweite, zugeordnete Prägewerk (24) zu einer Prägestation (16) zusammengefasst in einem Gestell (26) gehalten sind.

13. Einrichtung nach Anspruch 11 oder 12,
**dadurch gekennzeichnet,**
**dass** mehrere Prägestationen (16) linear oder längs einem Bogen, insbesondere Kreisbogen, hintereinander angeordnet sind.

14. Einrichtung nach Anspruch 13,
**dadurch gekennzeichnet,**
**dass** mehrere Prägestationen (16) an einer Rundtaktmaschine (6) oder Lineartaktmaschine (56) angeordnet sind.

15. Einrichtung nach einem der Ansprüche 11 bis 14,
**dadurch gekennzeichnet,**
**dass** der jeweilige Informationsträger (11 bis 15) taktweise transportiert wird und dass während dieses Transports die Typenträger, insbesondere Typenräder (39, 42), jedes Prägewerks (23,24), vorzugsweise zeitgleich, auf die zu prägenden Zeichen eingestellt werden.

16. Einrichtung nach einem der Ansprüche 11 bis 15,
**dadurch gekennzeichnet,**
**dass** die Typenträger, insbesondere Typenräder (39,42), jedes Prägewerks (23,24) koaxial zueinander angeordnet und trommelartig zusammengefasst sind.

17. Einrichtung nach einem der Ansprüche 11 bis 16,
**dadurch gekennzeichnet,**
**dass** jedes Prägewerk (23,24) 24 oder mehr, vorzugsweise bis zu 27, Typenräder (39,42) aufweist.

18. Einrichtung nach einem der Ansprüche 11 bis 17,
**dadurch gekennzeichnet,**
**dass** jedes Typenrad (39,42) 16 auf dem Umfang verteilte Typen trägt.

19. Einrichtung nach einem der Ansprüche 11 bis 18,
**dadurch gekennzeichnet,**
**dass** die Typenräder (39,42) jedes Prägewerks (23,24) voll automatisch einstellbar sind.

20. Einrichtung nach einem der Ansprüche 11 bis 19,
**dadurch gekennzeichnet,**
**dass** jedes Prägewerk (23,24) jeder Prägestation (16) als an sich bekanntes, voll automatisch einstellbares Nummerierwerk (36,37) ausgebildet ist, derart, dass dessen Nummerierräder als Typenräder (39,42) fungieren und als die Typenräder (39) des ersten Prägewerks (23) die erhabenen Typen (40) und als die Typenräder (42) des entsprechenden zweiten Prägewerks (24) die vertieften Typen (43) tragen.

21. Einrichtung nach einem der Ansprüche 11 bis 19,
**dadurch gekennzeichnet,**
**dass** jedem Prägewerk (23,24) ein an sich bekanntes, vollautomatisch einstellbares Nummerierwerk (36,37) getrieblich zugeordnet ist, dessen Nummerierräder (69,77) jeweils Zahnrädern entsprechend mit Antriebszähnen (75,78) versehen sind, und dass die Typenräder (39,42) jedes Prägewerks (23,24) als Zahnräder (49,52) ausgebildet sind, die zu ihrem der Einstellung dienenden Antrieb mit den Antriebszähnen (75,78) der zugeordneten Nummerierräder (69,77) in Eingriff stehen und die erhabenen Typen (40 ) bzw. vertieften Typen (43) tragen.

22. Einrichtung nach Anspruch 21,
**dadurch gekennzeichnet,**
**dass** die Typenräder (39,42) jedes Prägewerks (23,24) nebeneinander drehbar auf einer Achse (50,51) gehalten sind und die Längsmittelachse (38, 41) dieser Achse (50,51) parallel zur Achse (66,67) des jeweils zugeordneten Nummerierwerks (36,37) verläuft.

23. Einrichtung nach einem der Ansprüche (20 bis 22),
**dadurch gekennzeichnet,**
**dass** jedes vollautomatisch einstellbare Nummerierwerk (36,37) eine eigene Antriebseinrichtung (44,45) mit Antriebsmotor und nachgeschaltetem Getriebe aufweist.

24. Einrichtung nach einem der Ansprüche 11 bis 23,
**dadurch gekennzeichnet,**
**dass** die beiden eine Prägestation (16) bildenden Prägewerke (23,24), gegebenenfalls mit jeweils zugeordnetem Nummerierwerk (36,37), in einem Gestell (26) aufeinanderzu und voneinanderweg verschiebbar gelagert sind.

25. Einrichtung nach einem der Ansprüche 11 bis 24,
**dadurch gekennzeichnet,**
**dass** an jedem Prägewerk (23,24) eine Antriebseinrichtung (29,30) angreift, mittels der das jeweilige Prägewerk (23,24) zwischen der Prägestellung und der Ausgangsstellung bewegbar ist.

26. Einrichtung nach Anspruch 25,
**dadurch gekennzeichnet,**
**dass** die Antriebseinrichtung (29,30) jeweils einen druckmittelbetriebenen Arbeitszylinder (31) und eine Hebelanordnung (32) nach Kniehebelprinzip aufweist, auf die der Arbeitszylinder (31) arbeitet.

27. Einrichtung nach einem der Ansprüche 14 bis 26,
**dadurch gekennzeichnet,**
**dass** die Rundtaktmaschine (6) einen im Takt in einer Richtung umlaufend antreibbaren Rundtisch (8) aufweist, der in vorzugsweise gleich großen Umfangswinkelabständen voneinander angeordnete Halteeinrichtungen (9) für jeweils einen Informationsträger (11 bis 15) aufweist.

28. Einrichtung nach Anspruch 27,
**dadurch gekennzeichnet,**
**dass** die Halteeinrichtung (9) als Klemmvorrichtung ausgebildet ist.

29. Einrichtung nach Anspruch 27 oder 28,
**dadurch gekennzeichnet,**
**dass** zumindest im Bereich der Zuführstelle (18) und der Abgabestelle (19) für die Informationsträger (11 bis 15) jeweils eine stationäre Betätigungseinrichtung (20,21) vorgesehen ist, mittels der die Halteeinrichtung (9), insbesondere Klemmvorrichtung, öffnenbar ist.

30. Einrichtung nach einem der Ansprüche 27 bis 29,
**dadurch gekennzeichnet,**
**dass** der Rundtaktmaschine (6) an der Zuführstelle (18) eine Zuführvorrichtung (22) für die einzelnen Informationsträger (11 bis 15) zugeordnet ist.

31. Einrichtung nach einem der Ansprüche 27 bis 30,
**dadurch gekennzeichnet,**
**dass** der Rundtaktmaschine (6) an der Abgabestelle (19) eine Abführvorrichtung für die einzelnen Informationsträger (11 bis 15) zugeordnet ist.

32. Einrichtung nach einem der Ansprüche 11 bis 31,
**dadurch gekennzeichnet,**
**dass** zusätzlich zu mindestens einer Prägestation (16) eine Chipkodierungs-Station und/oder eine Magnetkodierungs-Station und/oder Druck-Station mit ink-jet- oder Laserdruck und/oder eine Oberflächenbehandlungs-Station (46), in der die Oberfläche der Prägung der Informationsträger (11 bis 15) behandelt wird, z.B. gefärbt oder mit einer Folie bedeckt wird, und/oder eine Kamera-Prüfstation od.dgl. vorgesehen sind.
